# EUROPEAN PATENT APPLICATION

(11) **EP 4 489 478 A1**
(43) Date of publication of application: **08.01.2025**
(21) Application number: 23781315.9
(22) Date of filing: 28.03.2023
(51) Int. Cl.: H04W 48/18, H04W 48/16, H04W 76/11, H04W 80/10

(54) **METHOD AND DEVICE FOR DETERMINING NETWORK SLICE IN WIRELESS COMMUNICATION SYSTEM**

(30) Priority: 29.03.2022 KR 20220038855
(71) Applicant: Samsung Electronics Co., Ltd., Suwon-si, Gyeonggi-do 16677 (KR)
(72) Inventor: SUH, Dongeun, Suwon-si Gyeonggi-do 16677 (KR); LEE, Hoyeon, Suwon-si Gyeonggi-do 16677 (KR)
(74) Representative: Nederlandsch Octrooibureau
(86) International application number: PCT/KR2023/004130
(87) International publication number: WO 2023/191460

(57) **Abstract**

The present disclosure relates to a 5G or 6G communication system for supporting a higher data transmission rate. A method for remapping slice by using an access and mobility management function (AMF) in a wireless communication system is provided. The method comprises the steps of: determining that a slice for at least one protocol data unit (PDU) session of user equipment (UE) will be replaced with an alternative slice; transmitting, to a policy control function (PCF), a message for requesting the alternative slice including an identifier of the slice; receiving the message including the identifier of the alternative slice from the PCF in response to the message for requesting the alternative slice; and transmitting, to a session management function (SMF) corresponding to the at least one PDU session for the slice, a message for requesting a change in the slice including the identifier of the alternative slice.

## Description

### [Technical Field]

The disclosure relates to a method and device for determining a network slice in a wireless communication system. More specifically, the disclosure relates to a method and device for remapping a network slice.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Detailed Description of the Invention]

### [Technical Problem]

The 5G mobile communication network includes a 5G user equipment (UE), a 5G radio access network (RAN), and a 5G core network. The 5G core network includes network functions (NFs), such as the access and mobility management function (AMF) that provides a mobility management function of the UE, the session management function (SMF) that provides a session management function, the user plane function (UPF) that performs a data transfer role, a policy control function (PCF) that provides a policy control function, a unified data management (UDM) that provides data management functions, such as for subscriber data and policy control data, and unified data repository (UDR) that stores such various network functions.

The 5G system has a technology called session and service continuity (SSC) mode that supports session continuity for the purpose of improving quality-of-experience (QoE) of users or supporting mission critical services. The SSC is constituted of three modes, of which SSC mode 3 is nicknamed Make-Before-Break. If the network determines that the SSC mode 3 protocol data unit (PDU) session being used by the UE needs to be released, it establishes a new PDU session that may replace the PDU session, and then releases the existing PDU session, thereby supporting session continuity. The UE may maintain session continuity by moving traffic flows being transmitted/received through the existing PDU session to the new PDU session before the existing PDU session is released.

In the 5G system, network slicing is a technique and structure that enables several virtualized, independent, logical networks in one physical network. The network operator configures a virtual end-to-end network called a network slice and provides service to meet specified requirements for the service/application. The network slice is identified by an identifier called single-network slice selection assistance information (S-NSSAI), and the network operator provides the network slice(s) to the UE to receive a service.

Specifically, in the 5G system, when the UE registers in the network, the UE transmits identifier information (i.e., requested S-NSSAIs) about the network slices to be requested to the AMF, and the AMF provides information (allowed NSSAI) about the network slices usable by the UE to the UE considering the requested S-NSSAIs and subscriber information. Even if the UE does not provide the information about the network slices requested by the UE, the AMF may provide the UE with the allowed NSSAI. In this case, the allowed NSSAI may include information about the network slices set as default (i.e., default subscribed S-NSSAIs) among information about default configuration slices (default configured NSSAI) and subscription network slices included in the UE subscriber information.

When no slice may be included in the allowed NSSAI (e.g., when the default configured NSSAI and default subscribed S-NSSAIs are absent or unavailable), the AMF transmits, to the UE, a network registration reject message including the cause code indicating that registration is rejected due to lack of an available slice.

Meanwhile, when intending to include any slice in the allowed NSSAI of the UE, an admission control (network slice admission control (NSAC)) procedure and an authentication (network slice-specific authentication and authorization (NSSAA)) procedure for the corresponding network slice may be performed. In the NSAC procedure, whether to allow the slice is determined based on the number of UEs currently registered in a particular slice and the maximum number of registered UEs allowed in that slice (i.e., whether to include the slice in the allowed NSSAI). In the NSSAA procedure, an authentication procedure is performed with an AAA-S, which is a server that performs authentication on the slice through an NSSAA function (NSSAAF) based on the credential information for the UE's slice. In this case, considering the authentication result, it is determined whether to allow the slice (i.e., whether to include the slice in allowed NSSAI is determined).

Meanwhile, in order to transmit/receive data to/from a specific data network (DN) through allowed slices (allowed NSSAIs), the UE may select one of the allowed slices, request to generate a packet data unit (PDU) session to a specific data network name (DNN) in the corresponding slice, and transmits/receives data through the generated PDU session. A PDU session includes several traffic flows, and the traffic flows include two types: guaranteed bitrate quality-of-service flow (GBR QoS flow) and non-GBR QoS flow.

Meanwhile, in the 5G system, it may be determined that the corresponding slice is impossible to use or the corresponding slice is a slice to be terminated soon due to the occurrence of congestion for the slice, operation and management (OAM) reasons for a specific slice, or speed drop of the application on slice. Such a slice is referred to as a slice to be terminated. In this case, the 5G system requires a technique for selecting a new slice that may replace the corresponding slice (i.e., select a target slice or a selected slice) and moves existing PDU sessions belonging to the corresponding slice to a newly selected slice. In particular, there is required a method for determining a new slice considering, e.g., the policy for a slice to be used for each application and influence by the network due to a slice change.

An embodiment of the present invention proposes a method for determining a new slice for a corresponding slice(s) when congestion (network slice congestion context) occurs among various 5G network entities belonging to the network slice for each PDU session in the 5G system, when use of a specific slice(s) needs to be temporarily or permanently stopped for a specific slice(s) due to operational reasons (in case of OAM), when application performance is deteriorated, or when use of the corresponding slice(s) needs to be temporarily or permanently stopped.

### [Technical Solution]

According to an embodiment of the disclosure, a method for slice remapping by an access and mobility management function (AMF) in a wireless communication system comprises determining that a slice for at least one protocol data unit (PDU) session of a user equipment (UE) is to be replaced with an alternative slice, transmitting a message for requesting the alternative slice including an identifier of the slice to a policy control function (PCF), in response to the message for requesting the alternative slice, receiving a response message including an identifier of the alternative slice from the PCF, and transmitting a message for requesting a change of a slice including the identifier of the alternative slice to a session management function (SMF) corresponding to the at least one PDU session for the slice.

According to an embodiment of the disclosure, an electronic device implementing an access and mobility management function (AMF) in a wireless communication system comprises memory, a transceiver, and a controller connected to the memory and the transceiver. The controller is configured to: determine that a slice for at least one protocol data unit (PDU) session of a user equipment (UE) is to be replaced with an alternative slice, transmit a message for requesting the alternative slice including an identifier of the slice to a policy control function (PCF), in response to the message for requesting the alternative slice, receive a response message including an identifier of the alternative slice from the PCF, and transmit a message for requesting a change of a slice including the identifier of the alternative slice to a session management function (SMF) corresponding to the at least one PDU session for the slice.

According to an embodiment of the disclosure, a method for slice remapping by a session management function (SMF) in a wireless communication system comprises determining that a slice for at least one protocol data unit (PDU) session of a user equipment (UE) is to be replaced with an alternative slice, transmitting a message for requesting the alternative slice including an identifier of the slice to a policy control function (PCF), in response to the message for requesting the alternative slice, receiving a response message including an identifier of the alternative slice from the PCF, and transmitting the identifier of the slice and the identifier of the alternative slice to an access and mobility management function (AMF).

According to an embodiment of the disclosure, an electronic device implementing a session management function (SMF) in a wireless communication system comprises memory, a transceiver, and a controller connected to the memory and the transceiver. The controller is configured to: determine that a slice for at least one protocol data unit (PDU) session of a user equipment (UE) is to be replaced with an alternative slice, transmit a message for requesting the alternative slice including an identifier of the slice to a policy control function (PCF), in response to the message for requesting the alternative slice, receive a message including an identifier of the alternative slice from the PCF, and transmit the identifier of the slice and the identifier of the alternative slice to an access and mobility management function (AMF).

### [Advantageous Effects]

An embodiment of the present invention proposes a method in which an AMF or an SMF stores a network slice which is to be remapped and determines a new slice for each slice through a PCF or a UDM. Through the proposed method, the network operator may determine a new slice for the existing slice and move traffic for the existing slice to the new slice. Thus, the operator may achieve effects, such as load distribution between slices and enhanced quality of experience (QoE) by removing slices with poor performance while maintaining session continuity.

### [Brief Description of the Drawings]

FIG. 1 illustrates a method in which an AMF receives remapping target slice information (S-NSSAIs subject to slice remapping) and alternative slice information (slice remapping information per S-NSSAI) in a network registration procedure according to an embodiment of the present invention;
FIG. 2 illustrates a procedure in which an AMF receives a new slice (selected S-NSSAI) from a PCF for a slice required to be remapped and requests to generate a PDU session to the new slice according to an embodiment of the present invention;
FIG. 3 illustrates a procedure in which an SMF receives a new slice (selected S-NSSAI) from a PCF for a slice required to be remapped and requests to generate a PDU session to the new slice according to an embodiment of the present invention;
FIG. 4 is a flowchart illustrating operations of an AMF according to an embodiment of the present invention;
FIG. 5 is a flowchart illustrating operations of a SMF according to an embodiment of the present invention; and
FIG. 6 is a block diagram illustrating an electronic device according to an embodiment of the present invention.

### [Mode for Carrying out the Invention]

A 5G mobile communication network includes a 5G user equipment (UE, terminal), a 5G radio access network (RAN, a base station, a 5g nodeB (gNB), an evolved nodeB (eNB)), and a 5G core network. The 5G core network includes network functions (NFs), such as the access and mobility management function (AMF) that provides a mobility management function of the UE, the session management function (SMF) that provides a session management function, the user plane function (UPF) that performs a data transfer role, a policy control function (PCF) that provides a policy control function, a unified data management (UDM) that provides data management functions, such as for subscriber data and policy control data, and unified data repository (UDR) that stores such various network functions.

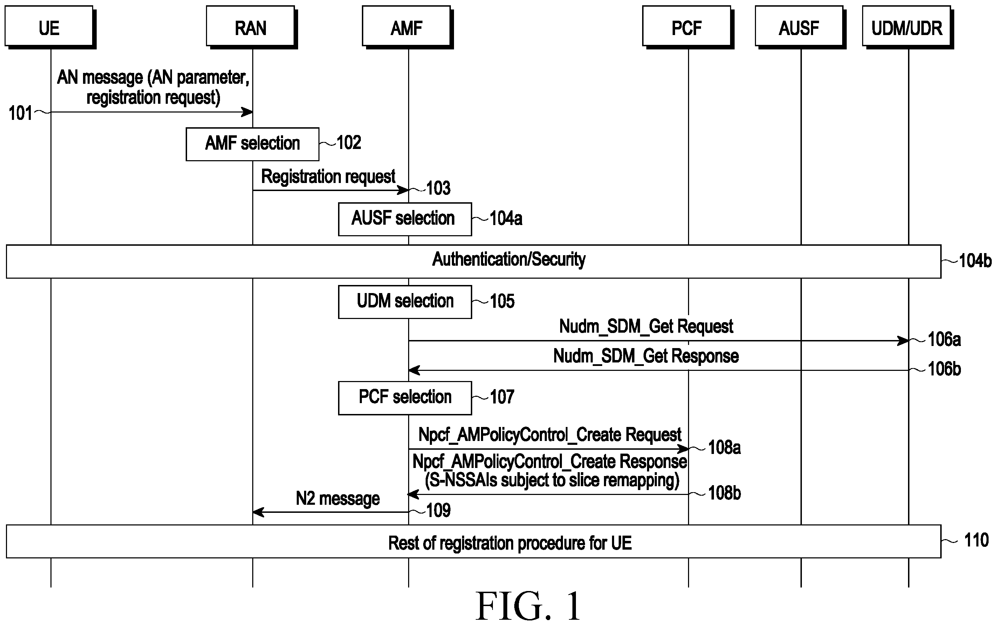

In the 3GPP system, a conceptual link connecting NFs in the 5G system is defined as a reference point. Example reference points included in the 5G system architecture represented in FIG. 1 are provided as follows.
N1: the reference point between the UE and the AMF
N2: Reference point between (R)AN and AMF
N3: Reference point between (R)AN and UPF
N4: Reference point between SMF and UPF
N5: Reference point between PCF and AF
N6: Reference point between UPF and DN
N7: Reference point between SMF and PCF
N8: the reference point between the UDM and the AMF
N9: Reference point between two core UPFs
N10: Reference point between UDM and SMF
N11: Reference point between AMF and SMF
N12: Reference point between AMF and AUSF
N13: the reference point between UDM and authentication server function (AUSF)
N14: the reference point between two AMFs
N15: the reference point between PCF and AMF in non-roaming scenario and reference point between PCF in visited network and AMF in roaming scenario

In the 5G system, network slicing is a technique and structure that enables several virtualized, independent, logical networks in one physical network. The network operator configures a virtual end-to-end network called a network slice and provides service to meet specified requirements for the service/application. In this case, the network slice is identified by an identifier called single-network slice selection assistance information (S-NSSAI). The network transmits a set of allowed slices (e.g., allowed NSSAI(s)) to the UE in a UE registration procedure, and the UE may transmit/receive application data through the protocol data unit (PDU) session generated through one S-NSSAI (i.e., network slice) among the allowed NSSAI(s).

In the present invention, the AMF or SMF may store information about remapping target slices (S-NSSAIs subject to slice remapping), 1) previously object alternative slice information for each slice from the PCF or UDM and, when a slice occurs that requires remapping among the remapping target slices, determine a new slice by utilizing corresponding information, or 2) when a slice requiring remapping occurs among the remapping target slices, request a new slice for remapping-required slice from the PCF to thereby determine a new slice (e.g., selected S-NSSAI or alternative S-NSSAI). In other words, remapping may mean replacement of the existing slice (or S-NSSAI) with the new slice (e.g., selected S-NSSAI or alternative S-NSSAI).

If a new slice is determined for the slice required to be remapped, the AMF or SMF may perform a procedure for obtaining a PDU session to the new slice according to the service session continuity (SSC) mode of each PDU session for the PDU sessions for the slice required to be remapped.

Further, if a new slice is determined for the slice required to be remapped, the AMF or SMF may generate a PDU session based on slice identification information instead of the remapping target slice upon requesting to generate a PDU session for the remapping target slice, and let the UE known.

FIG. 1 illustrates a method in which an AMF receives remapping target slice information (S-NSSAIs subject to slice remapping) and alternative slice information (slice remapping information per S-NSSAI) in a network registration procedure according to an embodiment of the present invention.

101: The UE transmits an access network (AN) message (AN parameter) and a registration request to the RAN. In this case, the message including the registration request may include a subscription concealed identifier (SUCI), a SG-global unique temporary identifier (5G-GUTI), or a permanent equipment identifier (PEI), a requested NSSAI, a UE MM core network capability, or the like.

102: The RAN selects the AMF based on the information in the AN message received from the UE.

103: The RAN transfers an N2 message (N2 parameters, registration request) to the AMF. The N2 parameter includes a selected PLMN ID, UE location information, UE context request, and the like.

104a: When the AMF determines that UE authentication is necessary, it selects an authentication server function (AUSF) based on the UE identifier (SUCI or SUPI).

104b: The authentication procedure for the UE is performed through the selected AUSF. Further, when there is no NAS security context for the UE, a security procedure is performed to obtain the NAS security context.

105: When subscription information for the UE is required, the AMF may select the UDM based on the SUPI, and the UDM may select the UDR in which the subscription information for the UE is stored.

106a: The AMF requests access and mobility subscription information for the UE from the UDM through the Nudm_SDM Get Request (SUPI, access and mobility subscription data) message.

106b: The UDM may transmit the subscription information to the AMF through the Nudm_SDM Get Response message. In this case, the UDM may obtain information transmitted to the AMF from the UDR and transmit the information to the AMF. The subscription information may include slice information (S-NSSAIs subject to slice remapping) that is a slice remapping target.

107: The AMF selects the PCF based on SUPI, S-NSSAI, and slice remapping capability. The information about the PCF supporting slice remapping may be obtained from the configuration information about the AMF or may be obtained through a network repository function (NRF). The AMF provides SUPI, S-NSSAI, slice remapping capability to the NRF to request information about a PCF supporting slice remapping among PCFs corresponding to SUPI and S-NSSAI, and the NRF provides information (e.g., address, etc.) on the corresponding PCF to the AMF.

When the PCF supporting slice remapping receives the S-NSSAI remapping request from the AMF, the PCF may select the selected S-NSSAI considering, e.g., the allowed NSSAI and notify the AMF. The selected S-NSSAI may be referred to as an alternative S-NSSAI.

When a slice that requires slice remapping occurs, if PDU sessions associated with the corresponding S-NSSAI exist, or if a PDU session request requested to the corresponding S-NSSAI is received, the AMF may request a new S-NSSAI (i.e., selected S-NSSAI) for the S-NSSAI to be terminated via the PCF.

108a: The AMF performs an access and mobility (AM) policy association establishment procedure or an AM policy association modification procedure on the PCF selected in 7 to receive the AM policy of the UE from the PCF. To that end, the AMF may transmit an AM policy request message (i.e., Npcf_AMPolicyControl_Create Request) to the PCF, and the request message may include SUPI. The request message may additionally include an allowed NSSAI, an access type, a request indication for slice subject to remapping, and the like.

When the AMF supports slice remapping, the request message transmitted to the PCF may include a request indication for slice subject to remapping with the allowed NSSAI.

108b: The PCF may identify the UE based on the SUPI received from the AMF in 108a and transmit the AM policy for the corresponding UE to the AMF. The PCF may use an AM policy response message (i.e., Npcf_AMPolicyControl_Create Response) to transmit the AM policy for the UE to the AMF.

In a case where the PCF receives a request indication for slice subject to remapping in 108a, if the PCF supports slice remapping, the PCF may transmit, to the AMF, slices (S-NSSAIs) subject to slice remapping, DNN subject to slice remapping, and slice remapping information per S-NSSAI by the operator policy or based on the its own configuration information. Further, the PCF may transmit a policy control request (PCR) trigger corresponding to a slice remapping required to the AMF. If the AMF receives the slices (S-NSSAIs subject to slice remapping), DNN subject to slice remapping, slice remapping information per S-NSSAI, and PCR trigger for slice remapping, the AMF may store the same.

After receiving the PCR trigger for slice remapping required, if a slice requiring remapping occurs or upon receiving a session request to the slice corresponding to the slices (S-NSSAIs) subject to slice remapping, it may request slice remapping from the PCF. The operation of requesting slice remapping from the PCF by the AMF may be performed without receiving a PCR trigger for slice remapping. In this case, the slices (S-NSSAIs) subject to slice remapping may include a value for setting all slices as slices subject to slice remapping.

The slice remapping information per slice (S-NSSAI) includes identifier information about a replaceable slice for each slice in the subscribed S-NSSAIs or the allowed slice (allowed NSSAI). If a slice requiring remapping occurs or if receiving, from the UE, a session generation request to the slice corresponding to the slices (S-NSSAIs) subject to slice remapping, the AMF may select a new slice for the slice requiring remapping based on the slice mapping information per S-NSSAI and use the same.

109: When receiving slice remapping information per S-NSSAI in step 108b, the AMF may transmit the corresponding information to the RAN through the N2 message. When a slice requiring remapping occurs in the RAN (e.g., a slice congestion context), the RAN may determine a new slice for the slice requiring remapping based on the corresponding information, notify the AMF and the PCF, or request the PCF to authorize the new slice based on the corresponding information.

110: The rest of the registration procedure for the UE is performed.

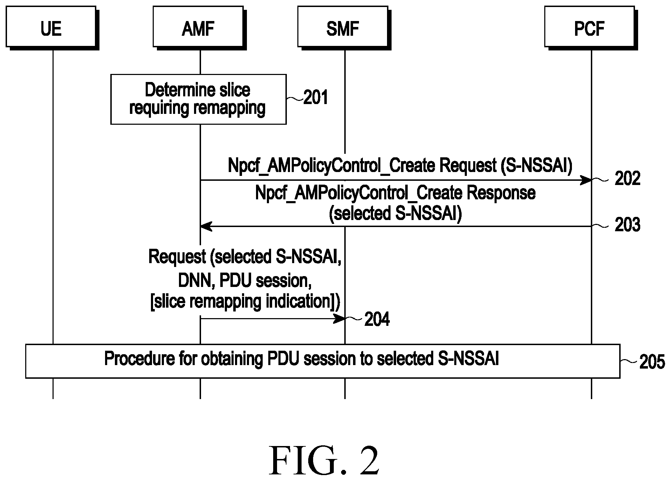

FIG. 2 illustrates a procedure in which an AMF receives a new slice (selected S-NSSAI) from a PCF for a slice required to be remapped and requests to generate a PDU session to the new slice according to an embodiment of the present invention.

201: The AMF may determine identifier information (i.e., slice that requires remapping) about a slice requiring remapping. This determination may be interpreted as determining that the slice is to be remapped (i.e., replaced) to the selected slice (or alternative slice). The AMF, upon receiving at least some of information including an indication that the corresponding network slice becomes unavailable and reason for unavailability, PDU session ID, UE ID, and S-NSSAI(s) from at least one of the orchestration and management (OAM), radio access network (RAN), network data analytics function (NWDAF), and network slice admission control function (NSACF), may perform corresponding determination and determine the identifier of the slice(s) (i.e., slice that requires remapping) requiring slice remapping based on the received information. For example, the AMF, upon receiving the S-NSSAI(s), UE ID, or PDU session ID, may determine that the slice correspond thereto is unavailable. The AMF may also receive an indication that the corresponding slice is unavailable together with the S-NSSAI(s), UE ID or PDU session ID. The AMF may also receive the indication that the corresponding slice is unavailable and the reason for unavailability together with the S-NSSAI(s), UE ID, or PDU session ID.

The AMF may determine the slice that requires remapping (i.e., S-NSSAI(s) for the slices requiring remapping) based on configuration information about the AMF or its own determination. The AMF may store the slice requiring remapping.

When receiving the slices (S-NSSAIs) subject to slice remapping from the UDM or the PCF, the AMF may determine all or some of the corresponding slices as slices requiring remapping.

202: When there is a PCR trigger related to slice remapping received from the PCF, the AMF may request the slice remapping from the PCF when a condition for the corresponding PCR trigger is met. The request for slice remapping may be interpreted as a request for an alternative slice to replace the existing slice. The condition for the PCR trigger may be met when there is a slice requiring remapping determined in step 201. Even when there is no PCR trigger related to slice remapping, the AMF may request slice remapping from the PCF.

The AMF may transmit an Npcf_AMPolicyControl_Update request message for requesting slice remapping from the PCF.

The message transmitted by the AMF to request slice remapping from the PCF may include a transaction ID (e.g., AM policy association ID) between the AMF and the PCF, a UE ID, an S-NSSAI(s), an allowed NSSAI, and an indication for requesting a remapped S-NSSAI. Here, the S-NSSAI(s) indicates an identifier of the slice(s) to be terminated (i.e., the slice(s) requiring remapping).

The PCF may update a UE route selection policy (URSP) rule of the UE based on the received S-NSSAI(s). For example, the PCF may update a rule regarding which slices (i.e., S-NSSAIs) the UE should transmit and receive specific traffic through. The PCF may transmit the updated URSP rule to the UE through a UE configuration update procedure.

203: The PCF determines the S-NSSAI(s) received in step 202 as slice(s) requiring remapping, and calculates a selected S-NSSAI for each S-NSSAI. The selected slice (selected S-NSSAI) may be calculated considering the URSP rule of the UE corresponding to the AMF-PCF transaction ID or the UE ID received in step 202 (the URSP rule includes a rule for which slices the UE should transmit and receive for each specific traffic matching rule through) and the allowed NSSAI for the UE.

The PCF may transmit the following information to the AMF: Transaction ID (e.g., AM policy association ID) between AMF and PCF received in step 202, UE ID, selected S-NSSAI for each S-NSSAI received in step 202

204: The AMF determines the selected S-NSSAI for each of the at least one S-NSSAI transmitted in step 202, based on the selected S-NSSAI for each S-NSSAI received in step 203. For PDU sessions corresponding to a slice in a slice requiring remapping, the AMF may transfer information including at least one of the transaction ID between AMF and SMF, PDU session ID, selected S-NSSAI, SSC mode, and an indication to request a change of a slice to the corresponding SMF for each PDU session (e.g., using a request message), generating a PDU session having the selected S-NSSAI.

205: A procedure to obtain a PDU session towards the selected S-NSSAI may be executed. For example, when an S-NSSAI other than the existing S-NSSAI for the PDU session ID, or a separate indicator (i.e., indication to request a change of a slice), is included in a message from the AMF, the SMF may recognize that the S-NSSAI for the corresponding PDU session should be changed and generate a session to a new S-NSSAI for PDU session corresponding to the S-NSSAI to be terminated. In this case, the SMF performs the following operations based on the SSC mode for each PDU session:

In SSC mode 2, the SMF releases the existing session and transmits a DNN for the existing session and a new session generation request instruction to the selected S-NSSAI, allowing the UE to generate a new session to the selected S-NSSAI and the DNN for the existing session.

In SSC mode 3, the SMF transmits a DNN for the existing session and a new session generation request instruction to the selected S-NSSAI, allowing the UE to generate a new session for the existing session and the selected S-NSSAI. The SMF may release the existing session when being aware that a new session has been generated or based on a timer value.

Further, the SMF may receive an indication to request a change of a slice and, if selected S-NSSAI is supportable, may change only the S-NSSAI value of the existing PDU session stored in, e.g., the SMF, UPF, RAN, or AMF through a PDU session modification procedure.

Meanwhile, when grasping that the S-NSSAI for the PDU session should be changed, the SMF may request SSC mode determination for the PDU session from the PCF and receive the SSC mode, and then perform operations according to the SSC mode. To that end, the SMF may transmit the existing S-NSSAI for the PDU session, selected S-NSSAI, and data network name (DNN) to the PCF. When receiving a message from the SMF, the PCF may determine the SSC mode and provide the same to the SMF.

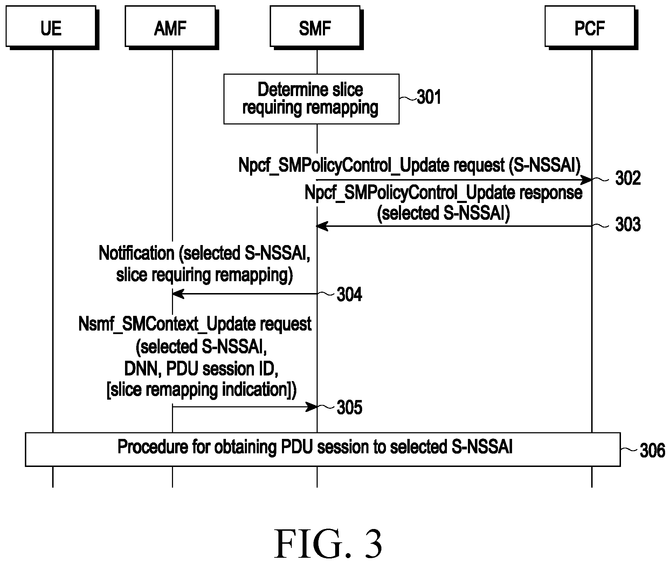

FIG. 3 illustrates a procedure in which an SMF receives a new slice (selected S-NSSAI) from a PCF for a slice required to be remapped and requests to generate a PDU session to the new slice according to an embodiment of the present invention.

301: The SMF may determine identifier information (i.e., slice that requires remapping) about a slice requiring remapping. The SMF, upon receiving at least some of an indication that the corresponding network slice becomes unavailable and reason for unavailability, PDU session ID, UE ID, and S-NSSAI(s) from the orchestration and management (OAM), radio access network (RAN), network data analytics function (NWDAF), network slice admission control function (NSACF), or the AMF, may perform corresponding determination and determine the identifier of the slice(s) (i.e., slice that requires remapping) requiring slice remapping based on the received information. For example, the SMF, upon receiving the S-NSSAI(s), UE ID, or PDU session ID, may determine that the slice correspond thereto is unavailable. The SMF may also receive an indication that the corresponding slice is unavailable together with the S-NSSAI(s), UE ID or PDU session ID. The SMF may also receive the indication that the corresponding slice is unavailable and the reason for unavailability together with the S-NSSAI(s), UE ID, or PDU session ID.

The SMF may determine the slice that requires remapping (i.e., S-NSSAI(s) for the slices requiring remapping) based on configuration information about the SMF or its own determination. The SMF may store the slice requiring remapping.

When receiving the slices (S-NSSAIs) subject to slice remapping from the UDM or the PCF, the SMF may determine all or some of the corresponding slices as slices requiring remapping.

302: The SMF requests information about a new slice to be used instead of the slice to be terminated, from the PCF. The request may be transmitted through an NpcF_SMPolicyControl_Update request message. The request may include the transaction ID between SMF and PCF (e.g., SM policy association ID), PDU session ID, S-NSSAI(s), allowed NSSAI, and an indication for requesting a new S-NSSAI. Here, the S-NSSAI(s) indicates an identifier of the slice(s) to be terminated.

The PCF may update the URSP rule of the UE based on the received S-NSSAI(s). For example, the PCF may update a rule regarding which slices (i.e., S-NSSAIs) the UE should transmit and receive specific traffic through. The PCF may transmit the updated URSP rule to the UE through a UE configuration update procedure.

303. The PCF determines the S-NSSAI(s) received in 302 as slice(s) requiring remapping, and calculates a selected S-NSSAI for each S-NSSAI. The selected slice (selected S-NSSAI) may be calculated considering the URSP rule of the UE corresponding to the AMF-PCF transaction ID or the UE ID received in 302 (the URSP rule includes a rule for which slices the UE should transmit and receive for each specific traffic matching rule through) and the allowed NSSAI for the UE.

The PCF may transmit, to the SMF, information including the SMF-PCF transaction ID (e.g., SM policy association ID), PDU session ID, and the selected S-NSSAI per S-NSSAI received in 302. To that end, a pcF_SMPolicyControl_Update response message may be used.

304: The SMF may transmit a notification including information about the selected S-NSSAI per slice received in 303 and the slice requiring remapping, to the AMF.

305: For PDU sessions corresponding to a slice in a slice requiring remapping, when receiving the selected S-NSSAI and the second request message from the SMF in 304, the AMF may transfer information including at least one of the transaction ID between AMF and SMF, PDU session ID, selected S-NSSAI, SSC mode, and an indication to request a change of a slice to the corresponding SMF for each PDU session (e.g., using an Nsmf_SMContext _Update request message), generating a PDU session having the selected S-NSSAI.

When the SMF managing the PDU session for the slice requiring remapping and the SMF managing the PDU session for the slice to be changed differ from each other, the SMF related to steps 301, 302, 303, and 304 and the SMF receiving information from the AMF in step 305 may differ from each other. When the SMF managing the PDU session for the slice requiring remapping and the SMF managing the PDU session for the slice to be changed are identical to each other, the SMF related to steps 301, 302, 303, and 304 and the SMF receiving information from the AMF in step 305 may be identical to each other.

306: A procedure to obtain a PDU session towards the selected S-NSSAI may be executed. For example, when an S-NSSAI other than the existing S-NSSAI for the PDU session ID, or a separate indicator (i.e., indication to request a change of a slice), is included in a message received from the AMF in 305, the SMF may recognize that the S-NSSAI for the corresponding PDU session should be changed and generate a session to a new S-NSSAI for PDU session corresponding to the S-NSSAI to be terminated. In this case, the SMF performs the following operations based on the SSC mode for each PDU session:
In SSC mode 2, the SMF releases the existing session and transmits a DNN for the existing session and a new session generation request instruction to the selected S-NSSAI, allowing the UE to generate a new session to the selected S-NSSAI and the DNN for the existing session.

In SSC mode 3, the SMF transmits a DNN for the existing session and a new session generation request instruction to the selected S-NSSAI, allowing the UE to generate a new session for the existing session and the selected S-NSSAI. The SMF may release the existing session when being aware that a new session has been generated or based on a timer value.

Further, the SMF may receive an indication to request a change of a slice and, if selected S-NSSAI is supportable, may change only the S-NSSAI value of the existing PDU session stored in, e.g., the SMF, UPF, RAN, or AMF through a PDU session modification procedure.

Meanwhile, when grasping that the S-NSSAI for the PDU session should be changed, the SMF may request SSC mode determination for the PDU session from the PCF and receive the SSC mode, and then perform operations according to the SSC mode. To that end, the SMF may transmit the existing S-NSSAI for the PDU session, selected S-NSSAI, and DNN to the PCF.

When receiving a message from the SMF, the PCF may determine the SSC mode and provide the same to the SMF.

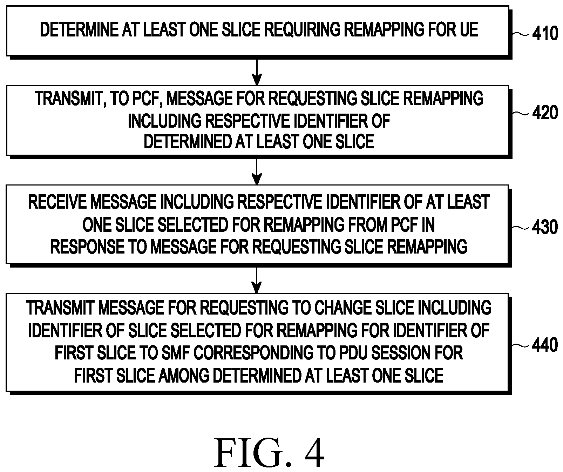

FIG. 4 is a flowchart illustrating operations of an AMF according to an embodiment of the present invention.

Referring to FIG. 4, the AMF may determine at least one slice requiring remapping for the UE (410). Each slice requiring remapping may correspond to at least one PDU session of the UE. The determination may be substantially identically interpreted as determining that the slice for at least one PDU session is to be replaced with an alternative slice. To determine at least one slice requiring remapping, the AMF may receive an S-NSSAI, a UE ID, or a PDU session ID from at least one of the OAM, RAN, NWDAF, and NSACF and determine at least one slice corresponding to the received S-NSSAI, UE ID, or PDU session ID as the slice requiring remapping. The AMF may receive information indicating at least one slice subject to remapping from the UDM or the PCF and determine all or some of the at least one slice subject to remapping as at least one slice requiring remapping. The AMF may determine the at least one slice requiring remapping on its own according to its own criteria.

The AMF may transmit, to the PCF, a message for requesting slice remapping including the respective identifier of the at least one slice determined to require remapping (420). The respective identifier of the at least one slice requiring remapping may be the S-NSSAI.

The PCF to transmit a message for requesting slice remapping may be selected from among a plurality of PCFs based on the slice remapping capability of the PCF. For example, the AMF may select a PCF supporting slice remapping from among the plurality of PCFs. The slice remapping capability of the PCF may be obtained from the configuration information about the AMF or from the NRF.

To request slice remapping, at least one of the transaction ID between the AMF and the PCF, UE ID, the respective identifier of at least one slice allowed for remapping (at least one slice determined to require remapping is allowed to be remapped to the at least one slice allowed for remapping), and the indication to request the remapped slice may be further included.

The PCF receiving the message for requesting slice remapping may select at least one slice for remapping the at least one slice determined to require remapping based on the URSP rule for the UE and the respective identifier of the at least one slice allowed for remapping.

The AMF may receive a message including the respective identifier of the at least one slice selected for remapping from the PCF in response to the message for requesting slice remapping (430). Each of the at least one slice selected for remapping may correspond to one of the at least one slice determined to require remapping.

The AMF may transmit, to the SMF corresponding to the PDU session for a first slice among the at least one slice determined to require remapping, a message for requesting to change the slice including the identifier of the slice selected for remapping for the identifier of the first slice (440).

The message for requesting to change the slice may further include at least one of a transaction ID between the AMF and the PCF, a UE ID, an SSC mode, or an indication to request a change of a slice

When the SMF receives the message for requesting to change the slice, the SMF may generate a new session corresponding to the identifier of the selected slice and release the session for the existing first slice.

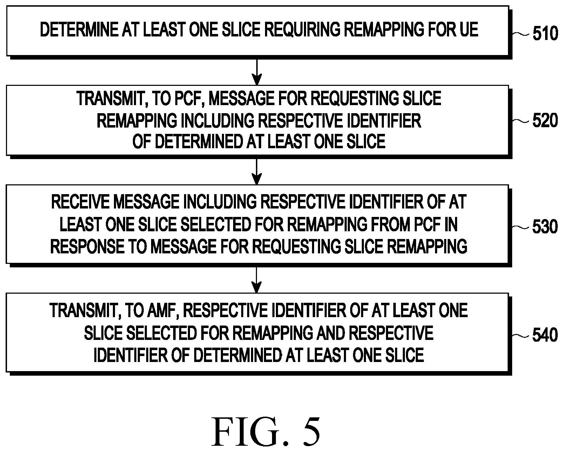

FIG. 5 is a flowchart illustrating operations of a SMF according to an embodiment of the present invention.

Referring to FIG. 5, the SMF may determine at least one slice requiring remapping for the UE (510). Each slice requiring remapping may correspond to at least one PDU session of the UE. The determination may be substantially identically interpreted as determining that the slice for at least one PDU session is to be replaced with an alternative slice. To determine at least one slice requiring remapping, the SMF may receive an S-NSSAI, a UE ID, or a PDU session ID from at least one of the OAM, RAN, NWDAF, and NSACF and determine at least one slice corresponding to the received S-NSSAI, UE ID, or PDU session ID as the slice requiring remapping. The SMF may receive information indicating at least one slice subject to remapping from the UDM or the PCF and determine all or some of the at least one slice subject to remapping as at least one slice requiring remapping. The SMF may determine the at least one slice requiring remapping on its own according to its own criteria.

The SMF may transmit, to the PCF, a message for requesting slice remapping including the respective identifier of the at least one slice determined to require remapping (520).

To request slice remapping, at least one of the transaction ID between the SMF and the PCF, UE ID, the respective identifier of at least one slice allowed for remapping (at least one slice determined to require remapping is allowed to be remapped to the at least one slice allowed for remapping), and the indication to request the remapped slice may be further included.

The PCF receiving the message for requesting slice remapping may select at least one slice for remapping the at least one slice determined to require remapping based on the URSP rule for the UE and the respective identifier of the at least one slice allowed for remapping.

The SMF may receive a message including the respective identifier of the at least one slice selected for remapping from the PCF in response to the message for requesting slice remapping (530). Each of the at least one slice selected for remapping corresponds to one of the at least one slice determined to require remapping.

The SMF may transmit, to the AMF, the respective identifier of the at least one slice determined to require remapping and the respective identifier of the at least one slice selected for remapping (540). Thereafter, the AMF may transmit, to the SMF managing the PDU session for a second slice, a message for changing the first slice among the at least one slice determined to require remapping into the second slice among the at least one slice selected for remapping. The message may include an identifier of the second slice and may further include at least one of a transaction ID between the AMF and the PCF, a UE ID, an SSC mode, or an indication to request a change of a slice

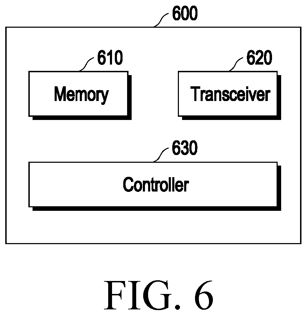

FIG. 6 is a block diagram illustrating an electronic device according to an embodiment of the present invention.

The electronic device 600 of FIG. 6 may implement one of the network entities mentioned in the present invention. For example, the electronic device 600 may implement one of a UE, a RAN (i.e., base station), an AMF, an SMF, a PCF, an AUSF, a UDM, a UDR, and an NRF.

The electronic device 600 may include memory 610, a transceiver 620, and a controller 630.

The memory 610 may store transient or non-transient data necessary for the operation of the electronic device 600. The memory 610 may include a transient storage medium (e.g., random access memory (RAM)) and a non-transitory storage medium (e.g., read-only memory (ROM), hard disk, floppy disk, CD-ROM, or solid disk drive (SSD)). The memory 610 may store instructions executable by the controller 630. The instructions may be executed by the controller 630 to enable the controller 630 or the electronic device 600 to perform specific operations. The operations executed through the instructions may include the operations of the network entity implemented by the electronic device 600 described in the disclosure.

Through the transceiver 620, the electronic device 610 may perform communication with other devices, other network entities, or networks. Through the transceiver 620, the electronic device 600 may detect a signal from the outside or emit a signal. The transceiver 620 may support known communication schemes. For example, the transceiver 610 may support Wi-Fi communication, cellular communication (e.g., long term evolution (LTE), LTE-Advanced (LTE-A), millimeter wave (mmWave) communication, code division multiple access (CDMA), wideband CDMA (WCDMA), or short-range communication (Bluetooth), but is not limited thereto.

The controller 630 may be implemented as one or more processors. The controller 630 may be connected to other components of the electronic device 600, including the memory 610 and the transceiver 620, to control the operation of the electronic device 600 and the operations of the components of the electronic device 600. In other words, operations performed in the electronic device 600 may be understood as being substantially performed or controlled by the controller 630. The operations of each of the network entities described in the disclosure may be interpreted as the controller 630 of the electronic device 600 implementing the network entity performing the corresponding operations.

The disclosure proposes a procedure for obtaining a replaceable slice when a slice that may replace an existing slice is required. The AMF or SMF may store information about remapping target slices (S-NSSAIs subject to slice remapping), 1) previously object alternative slice information for each slice from the PCF or UDM and, when a slice occurs that requires remapping among the remapping target slices, determine a new slice by utilizing corresponding information, or 2) when a slice requiring remapping occurs among the remapping target slices, request a new slice for remapping-required slice from the PCF to thereby determine a new slice (selected S-NSSAI).

If a new slice is determined for the slice required to be remapped, the AMF or SMF may perform a procedure for obtaining a PDU session to the new slice according to the service session continuity (SSC) mode of each PDU session for the PDU sessions for the slice required to be remapped.

Further, if a new slice is determined for the slice required to be remapped, the AMF or SMF may generate a PDU session based on slice identification information instead of the remapping target slice upon requesting to generate a PDU session for the remapping target slice, and let the UE known.

Although embodiments of the present invention have been described with reference to the accompanying drawings, It will be appreciated by one of ordinary skill in the art that the present disclosure may be implemented in other various specific forms without changing the essence or technical spirit of the present disclosure. Thus, it should be noted that the above-described embodiments are provided as examples and should not be interpreted as limiting.

## Claims

1. A method for slice remapping by an access and mobility management function (AMF) in a wireless communication system, the method comprising:
determining that a slice for at least one protocol data unit (PDU) session of a user equipment (UE) is to be replaced with an alternative slice;
transmitting a message for requesting the alternative slice including an identifier of the slice to a policy control function (PCF);
in response to the message for requesting the alternative slice, receiving a response message including an identifier of the alternative slice from the PCF; and
transmitting a message for requesting a change of a slice including the identifier of the alternative slice to a session management function (SMF) corresponding to the at least one PDU session for the slice.

2. The method of claim 1, wherein determining that the slice for the at least one PDU session of the UE is to be replaced with the alternative slice includes:
receiving single-network slice selection assistance information (S-NSSAI), a UE ID, or a protocol data unit (PDU) session ID from at least one of an orchestration and management (OAM), a radio access network (RAN), a network data analytics function (NWDAF), and a network slice admission control function (NSACF); and
determining a slice corresponding to the received S-NSSAI, UE ID, or PDU session ID as the slice to be replaced with the alternative slice.

3. The method of claim 1, wherein determining that the slice for the at least one PDU session of the UE is to be replaced with the alternative slice includes:
receiving information indicating at least one slice subject to replacement from a unified data management (UDM) or the PCF; and
determining all or some of the at least one slice subject to replacement as the at least one slice requiring remapping.

4. The method of claim 1, wherein the message for requesting the alternative slice further includes at least one of a transaction ID between the AMF and the PCF, a UE ID, a respective identifier of at least one slice allowed for remapping, wherein the slice is allowed to be replaced with the at least one slice allowed for remapping, and an indication to request the alternative slice.

5. The method of claim 1, wherein the alternative slice is determined by the PCF, based on a UE route selection policy (URSP) rule for the UE and a respective identifier of at least one slice allowed for replacement for the UE.

6. The method of claim 1, wherein the message for requesting to change the slice further includes at least one of a transaction ID between the AMF and the PCF, a UE ID, a session and service continuity (SSC) mode, an indication to request to change the slice.

7. The method of claim 1, further comprising:
obtaining a slice replacement capability of the PCF from configuration information about the AMF or a network repository function (NRF); and
selecting the PCF supporting slice replacement from among a plurality of PCFs based on the obtained slice replacement capability of the PCF.

8. The method of claim 1, further comprising:
transmitting an access and mobility (AM) policy request message for the UE to the PCF; and
receiving an AM policy response message including a policy control request (PCR) trigger for slice replacement from the PCF in response to the AM policy request message.

9. An electronic device implementing an access and mobility management function (AMF) in a wireless communication system, comprising:
memory;
a transceiver; and
a controller connected to the memory and the transceiver, wherein the controller is configured to:
determine that a slice for at least one protocol data unit (PDU) session of a user equipment (UE) is to be replaced with an alternative slice;
transmit a message for requesting the alternative slice including an identifier of the slice to a policy control function (PCF);
in response to the message for requesting the alternative slice, receive a response message including an identifier of the alternative slice from the PCF; and
transmit a message for requesting a change of a slice including the identifier of the alternative slice to a session management function (SMF) corresponding to the at least one PDU session for the slice.

10. The electronic device of claim 9, wherein the controller is further configured to operate according to the method of any one of claims 2 to 8.

11. A method for slice remapping by a session management function (SMF) in a wireless communication system, the method comprising:
determining that a slice for at least one protocol data unit (PDU) session of a user equipment (UE) is to be replaced with an alternative slice;
transmitting a message for requesting the alternative slice including an identifier of the slice to a policy control function (PCF);
in response to the message for requesting the alternative slice, receiving a response message including an identifier of the alternative slice from the PCF; and
transmitting the identifier of the slice and the identifier of the alternative slice to an access and mobility management function (AMF).

12. The method of claim 11, wherein determining that the slice for the at least one PDU session of the UE is to be replaced with the alternative slice includes:
receiving single-network slice selection assistance information (S-NSSAI), a UE ID, or a protocol data unit (PDU) session ID from at least one of an orchestration and management (OAM), a radio access network (RAN), a network data analytics function (NWDAF), and a network slice admission control function (NSACF); and
determining at least one slice corresponding to the received S-NSSAI, UE ID, or PDU session ID as the slice to be replaced.

13. The method of claim 11, wherein determining that the slice for the at least one PDU session of the UE is to be replaced with the alternative slice includes:
receiving information indicating at least one slice subject to replacement from a unified data management (UDM) or the PCF; and
determining all or some of the at least one slice subject to replacement as the slice to be replaced.

14. An electronic device implementing a session management function (SMF) in a wireless communication system, comprising:
memory;
a transceiver; and
a controller connected to the memory and the transceiver, wherein the controller is configured to:
determine that a slice for at least one protocol data unit (PDU) session of a user equipment (UE) is to be replaced with an alternative slice;
transmit a message for requesting the alternative slice including an identifier of the slice to a policy control function (PCF);
in response to the message for requesting the alternative slice, receive a message including an identifier of the alternative slice from the PCF; and
transmit the identifier of the slice and the identifier of the alternative slice to an access and mobility management function (AMF).

15. The electronic device of claim 14, wherein the controller is further configured to operate according to the method of any one of claims 12 to 13.
